# EUROPEAN PATENT APPLICATION

(11) **EP 4 180 486 A1**
(43) Date of publication of application: **17.05.2023**
(21) Application number: 21208037.8
(22) Date of filing: 12.11.2021
(51) Int. Cl.: C08L 23/08, C09D 123/08, D21H 17/34, D21H 19/20, D21J 1/08

(54) **AQUEOUS POLYOLEFIN DISPERSION FOR IMPROVING BARRIER PROPERTIES**

(71) Applicant: ACTEGA DS GmbH, 28219 Bremen (DE)
(72) Inventor: MAIER, Anna, 53229 Bonn (DE); OELJESCHLÄGER, Jane, 46483 Wesel (DE)
(74) Representative: Altana IP Department

(57) **Abstract**

The invention relates to an aqueous polyolefin dispersion X comprising
a. from 50 to 100 wt.% of an aqueous dispersion A comprising the following ingredients:
i. from 41 to 99 wt.% of A1, a mixture of different types of copolymers of ethylene and (meth)acrylic acid,
ii. from 1 to 59 wt.% of A2, another polymer or a mixture of other polymers, each not being a copolymer of ethylene and (meth)acrylic acid and each containing structure units of ethylene,
iii. from 0 - 35 wt.% of additive not being A1 or A2,

b. from 0 to 50 wt.% of a compound B, where compound B is a material dispersible or soluble in water and different from any of the ingredients of dispersion A,

wherein
- the wt.% of A and B is based on the solid content of the whole aqueous polyolefin dispersion X,
- the wt.% of the ingredients of dispersion A is based on the solid content of dispersion A,
- the sum of the wt.% of ingredients i) to iii) of dispersion A is 100%
and wherein after removal of the water the solid content of the aqueous polyolefin dispersion X has a Melt Flow Index (MFI) lower than 10 g/10min.

## Description

The present invention relates to an aqueous polyolefin dispersion, a process for its preparation, its use and to a fiber preparation.

By mechanically dispersing of polyolefins in water, so called secondary aqueous polyolefin dispersions can be obtained. These dispersions when applied to various substrates offer the special characteristics of polyolefins, including water/chemical resistance. Via mechanical dispersion technology water-borne dispersions of polymers are available. In general, secondary polymer dispersions in a carrier liquid can be prepared by high shear mixing of the polymer in the carrier liquid at a temperature that is above the melting temperature of the polymer. According to US 2014/0255683 aqueous polyolefin dispersions which are suitable as coating compositions are available by a melt kneading method in which special thermoplastic and acid polyolefins are processed

Grease-resistance, water resistance and water vapor resistance are barrier properties which are deemed as to be typical key properties of coated paper and coated carton board (both normally essentially containing plant fibers) that can be improved with the right choice of coating. Polyolefins are widely used for paper coating but are typically applied as a thermoplastic melt using extrusion coating techniques. The availability of water-based polyolefin dispersions provides an economically attractive alternative. The polyolefin dispersion can be applied to paper using conventional processes for water-based coatings, including various spraying techniques. In addition, the dispersion can be printed onto a paper web, such as by gravure printing, roll coating, etc.

US 7,528,080 proposes the use of a special aqueous polyolefin dispersion for the treatment of fibers so that corresponding treated textile articles are available having attractive impregnating properties.

However, the above-mentioned technology does not provide suitable polyolefin dispersions for paper applications revealing satisfying barrier properties. The problem addressed by the present invention is therefore that of providing a suitable aqueous polyolefin dispersion for paper and carton treatment. Said treatment with the aqueous polyolefin dispersion should permit the manufacturing of high-quality paper/carton articles, having beneficial characteristics in connection with grease-resistance, water resistance and/or water vapor resistance.

Furthermore, it is also essential that the applied aqueous dispersion is easy to process. For this reason, the viscosity of the dispersion should not be too high or too low, which is why in practice the maximum solids content of the dispersion must be limited accordingly. On the other hand, however, a high solids content is advantageous for the user in order to have to transport or process less water ballast per unit volume ("volume efficiency").

In addition to providing said barrier properties, a high-volume efficiency with, at the same time, good processability is to be regarded as an essential quality property of a suitable aqueous dispersion. The object on which the invention is based is thus to combine said quality requirements in a suitable manner.

The solution to this problem is an aqueous polyolefin dispersion X comprising
a. from 50 to 100 wt.% of an aqueous dispersion A comprising the following ingredients:
   i. from 41 to 99 wt.% of A1, a mixture of different types of copolymers of ethylene and (meth)acrylic acid,
   ii. from 1 to 59 wt.% of A2, another polymer or a mixture of other polymers, each not being a copolymer of ethylene and (meth)acrylic acid and each containing structure units of ethylene,
   iii. from 0 - 35 wt.% of additive not being A1 or A2,
b. from 0 to 50 wt.% of a compound B, where compound B is a material dispersible or soluble in water and different from any of the ingredients of dispersion A,
wherein
- the wt.% of A and B is based on the solid content of the whole aqueous polyolefin dispersion X,
- the wt.% of the ingredients of dispersion A is based on the solid content of dispersion A,
- the sum of the wt.% of ingredients i) to iii) of dispersion A is 100% and wherein after removal of the water the solid content of the aqueous polyolefin dispersion X has a Melt Flow Index (MFI) lower than 10 g/10min (DIN EN ISO 1133-1: 2011; measured at 130 °C at a load of 2,16 kg).

The components of the aqueous polyolefin dispersion X are selected in such a way that the above defined Melt Flow Index (MFI) is achieved. Most important in this connection is the selection of the relevant polymers, especially of the types of A1 (and the proportions of them).

The fiber preparation treated with the aqueous polyolefin dispersion according to the present invention provides excellent barrier properties, especially grease-resistance, water resistance and water vapor resistance. The dispersion according to the present invention has a good quality, especially a high dispersion stability (may be also because the relative high amount of A1) which is beneficial for the relevant paper/carton application. Furthermore, the use of a dispersion according to the present invention provides the possibility to combine a high-volume efficiency with a good processability (combination of an adjusted viscosity with a relative high solids content).

In yet a further embodiment the present invention relates to a process for the preparation of the aqueous polyolefin dispersion wherein
a. in a first step all polymer components of dispersion A are intimately mixed at a temperature in the range of 50°C to 200 °C after which a homogenous compound of all components is obtained and
b. in a next step the homogeneous compound is mixed with water, compound B (if contained), and a neutralizing agent at a temperature which is 2 to 20°C above the highest melting temperature of the organic polymer components mixed in the first step until an aqueous dispersion is obtained wherein all dispersed particles have a particle size below 150 µm.

Typically, after step b. the mixture is cooled down.

Furthermore, in another embodiment the present invention relates to a fiber preparation treated with said aqueous dispersion.

Additionally, the present invention relates to the use of the described aqueous polyolefin dispersion as a binder and/or as a coating composition for a fiber-based substrate, preferably for paper or carton.

The "premixing step" a. allows the preparation of an aqueous dispersion without the use of (additional) emulsifiers. It is advantageous to avoid these emulsifiers in the dispersion because of food safe reasons and properties in connection with heat sealability.

In a further embodiment, the first step in the process according to the present invention is performed in a twin-screw extruder.

In a further embodiment the process according to the present invention the mixing of the homogeneous compound with water, compound B and a neutralizing compound is performed under elevated pressure.

In yet another embodiment the process according to the present invention the process wherein the mixing of the homogeneous compound with water, compound B and a neutralizing compound is performed at a pressure which is higher than the vapour pressure of water at the mixing temperature.

### Aqueous polymer dispersion A

The aqueous polyolefin dispersion X of the current invention comprises an aqueous polymer dispersion A having the following ingredients:
i. from 41 to 99 wt.% of A1, a mixture of different copolymers of ethylene and (meth)acrylic acid,
ii. from 1 to 59 wt.% of A2, another polymer or a mixture of other polymers, each not being a copolymer of ethylene and (meth)acrylic acid and each containing structure units of ethylene,
iii. from 0 - 35 wt.% of additive not being A1 or A2,
wherein the wt% of the ingredients of dispersion A is based on the solid content of dispersion A, and the sum of the wt.% of ingredients i to iii of dispersion A is 100%.

In a preferred embodiment of the invention dispersion A comprises the following ingredients:
i) from 5*1* to *99* wt.% of A1,
ii) from *1* to 4*9* wt.% of A2 and
iii) from 0 - 35 wt.% of additive not being A1 or A2.

It is important that the ingredients of the dispersion A are selected in such a way that the "dried aqueous polyolefin dispersion X" has a Melt Flow Index (MFI) lower than 10 g/10min. The Melt Flow Index (MFI) is a measure of the ease of flow of the melt of a thermoplastic polymer (or of a corresponding mixture containing thermoplastic polymers). A typical approach to achieve said Melt Flow Index (MFI) lower than 10 g/10min on the one hand and to contribute a sufficient processability on the other hand is to use appropriate types of A1 having a different MFI.

A copolymer of ethylene and (meth)acrylic acid is generally produced by free radical copolymerization of ethylene with the corresponding acid monomer (normally in a pressure autoclave). Depending on the reaction conditions (e. g. educt composition, temperature and/or pressure), different polymerization mixtures will be obtained which differ, for example, with regard to MFI and/or acid content. One type of a copolymer of ethylene and (meth)acrylic acid that is obtained under a particular set of reaction conditions is then different from a type of a copolymer of ethylene and (meth)acrylic acid that is obtained under a different set of reaction conditions. Normally, a type of copolymer of ethylene and (meth)acrylic acid that is obtained under a specific set of reaction conditions is commercially supplied under a certain product name, where a type of copolymer of ethylene and (meth)acrylic acid that is obtained under a different set of reaction conditions is commercially supplied under a different product name.

According to a preferred embodiment of the invention the at least two different types of copolymers have a different MFI.

Typically, each of the at least two different types were produced by free radical copolymerization of ethylene with corresponding acid monomer, wherein the relevant copolymerization reaction conditions are selected differently in each case so that the at least two different types differ in terms of their MFI.

In this context, said reaction conditions relate on the one hand to the relevant chemistry (such as monomer concentration, initiator concentration, possible additives for controlling the molecular weight, etc.) and the underlying process technology (parameters such as pressure, temperature and residence time). Typically, the reaction conditions which influence the molecular weights (of the polymers) steer also the relevant MFI.

Appropriate types of A1 are normally melt processable. Such types typically have a Melt Flow Index (MFI) of between 2 to 2000 g/10 min (measured at 190 °C at a load of 2,16 kg).

According to a preferred embodiment at least 60 wt.% of A1 has a content of (meth)acrylic acid-based groups in the copolymer of 5-30 wt.%, wherein the wt.% is based on the total weight of the copolymer.

Examples of suitable commercially available types (copolymers of polyethylene and (meth)acrylic acid) that can be used in the dispersion according to the present invention include Primacor^{™} 5980 (ex. SK-Chemicals), Nucrel^{™} 925, Nucrel^{™} 960 (ex. Dow), Escor^{™} 5200 (ex. Exxonmobil) and A-C^{®} 5180 (ex. Honeywell).

Commercially available types with lower MFI: Nucrel^{™} 960, Nucrel^{™} 925, Primacor^{™} 699, Primacor^{™} 5980, Primacor^{™} 3440 (? AA 9,7 %), Escor^{™} 5200.

Commercially available types with higher MFI: A-C^{®} 5120, A-C^{®} 5180, A-C^{®} 5135, A-C^{®} 5150, Primacor^{™} 5995, Primacor^{™} 5990, Primacor^{™} XUS 60751.21.

The other polymer (A2) that is present in polymer dispersion A generally include copolymers having ethylene structural units. However, normally not only ethylene structural units are contained.

Preferably, at least 60 wt.% of A2 has an acid value of < 2 mg KOH/ g.

According to a preferred embodiment at least 60 wt.% of A2 are selected from the group consisting of copolymers containing vinyl acetate structural units and/or olefinic structural units with at least 3 carbon atoms.

Such types might be copolymers of ethylene and vinyl acetate (EVA) and copolymers of ethylene and vinyl acetate (EVA) modified with maleic anhydride.

According to a special embodiment at least 60 wt.% of A2 has a content of vinyl acetate groups in the copolymer of 10-60 wt.%, preferably 15-40 wt.%, wherein the wt.% is based on the total weight of the copolymer. Examples of suitable commercially available other polymers A2 containing vinyl acetate include Orevac^{®} T9305 (ex. SK-Chemicals), Escorene^{™} FL 00328 (ex. Exxonmobil), Evatane^{®} 40-55 (ex. SK-Chemicals).

As mentioned above also (A2) copolymer types containing olefinic structural units with at least 3 carbon atoms are preferred. Such olefinic structure units are based on polymerized olefin monomers, typically selected from C₃-C₁₂-alkenes and/or polyenes.

According to a special embodiment at least 60 wt.% of A2 is selected from the group consisting of
- polyolefins with ethylene and 1-octene structural units and
- polyolefins with ethylene and propylene structural units.

Examples of suitable commercially available other polymers A2 containing olefinic structural units with at least 3 carbon atoms include: Dutral CO 034 and Dutral CO 038, ethylene propylene copolymer (28 wt % propylene), "Versalis"; Vistamaxx 6202 elastomer with an ethylene content of 15 wt %, "Exxonmobil"; Engage 8407, propylene-based olefinic ethylene-octene copolymer, "Dow".

The additive that can be present in the aqueous dispersion according to the present invention includes dispersing agents, adhesion promotors, tackifiers, defoamers, pigments and any other material that is known for use in polymer dispersions or polymer compositions.

Examples of suitable additives that can be used in the aqueous dispersion according to the present invention include stearic acid, oleic acid and other long chain carboxylic acids, waxes, such as paraffin wax and polyolefin wax, and dioctyl sodium sulfosuccinate.

### Compound B

Compound B is optionally present in the aqueous dispersion according to the present invention. Compound B is a material that is dispersable or soluable in water or a mixture of materials that are dispersable or soluble in water and different from any of the ingredients of dispersion A. For example, compound B can be added to improve the ability to recycle materials comprising the aqueous dispersion according to the present invention or materials or articles that are formed by evaporating the solvent from this dispersion. Compound B can be an inorganic material or an organic material. For example, Compound B can be a polymer or a mixture of polymers, dispersable or soluble in water.

Examples of suitable materials that can be used as compound B in the aqueous dispersion according to the present invention include polyvinylpyrrolidone and polyethylene glycol (PEG). In one embodiment the aqueous polyolefin dispersion contains (as an ingredient of B) less than 5 wt.%, preferably less than 4 wt.% of PEG, based on the solid content of the whole aqueous dispersion (preferably combined with having a pH-value of 8.0 - 10.0). In the process for the preparation of the aqueous polyolefin dispersion according to the present invention the homogenized compound obtained in the first step is mixed with water, compound B, and a neutralizing agent at a temperature which is 2 to 20°C above the highest melting temperature of the components mixed in the first step until an aqueous dispersion is obtained wherein all dispersed particles have a particle size below 150 µm.

A temperature which is 2 to 20°C above the highest melting temperature of the components mixed in the first step means a temperatures which is 2 to 20°C above the highest melting temperature of any of the individual organic polymer components that are mixed to obtain the homogenized compound.

The neutralizing agent that is used in the process for the preparation of the aqueous polyolefin dispersion according to the present invention can be any basic aqueous solution, for example an aqueous solution of NH₃. The pH value of the aqueous polyolefin dispersion according to the present invention should be 8.0 - 10.0.

The size of the particles that are present in the aqueous polyolefin dispersion according to the present invention should be < 150 µm. This particle size can be measured by using a Microtrac S3500 laser diffraction system, using the wet dispersion module. For each measurement, 1 ml of a dispersion was added to the 1 l dispersing unit of the wet dispersion module, where the dispersing module was filled with water with a pH in the range of 7 - 10.

Typically, the (whole) aqueous polyolefin dispersion X has a solid content of 10 - 60 wt.%. Generally, it is possible to reduce the water proportion: a high solids content is advantageous for the user in order to have to transport or process less water ballast per unit volume ("volume efficiency").

The process according to the present invention allows for the use of ingredients that are approved as indirect food additives, i.e. substances that may come into contact with food as part of packaging or processing equipment, but are not intended to be added directly to food. The ingredients are sometimes referred to as food safe materials or material suited for direct food contact. In this connection, "food safe" means that these materials satisfy the criteria of the European Union Regulation "EU 10-2011 for plastics intended to come into contact with food". In one embodiment of the present invention, all ingredients that are present in the aqueous polymer dispersion are food safe materials or material suited for direct food contact.

In general, the aqueous polyolefin dispersion X according to the present invention typically has the following properties:
- Solid content 10 - 60 wt.%
- Viscosity 10 - 10000 mPa*s
- Storage stability ≥ 6 months
- Average particle size from 0.1 to 50 µm

The process according to the present invention provides a kind of premixing of (dry) components which is performed in the first step: All solid components of dispersion A, especially component A1 and A2 are intimately mixed at a temperature in the range of 50°C to 200 °C after which a homogenous compound of all components is obtained. Said premixing step seems to be the basis for the generation of hybrid particles containing A1 and A2. In the next step the homogeneous compound provided in the premixing step is further mixed with water, preferably with compound B, and a neutralizing agent: The result is an aqueous polyolefin dispersion comprising dispersed hybrid particles containing A1 and A2.

In order to provide experimental information regarding the composition of the dispersion as analytical methods especially Differential Scanning Calorimetry (DSC) and/ or IR spectroscopy might be used. According to the said DSC method the melting temperatures (melting ranges) were determined on the one hand for the used raw materials (polymers) and on the other hand for the produced compounds (solid content of the dispersion). The melting ranges of the produced compounds were generally much broader than of the used raw materials.

### DEFINITIONS

Within the content of this description the following definitions are used
- (meth)acrylic means acrylic and/or methacrylic;
- A homogeneous polymer containing compound is a compound that shows no optical defects when cast into a film with a thickness in the range of 1 to 2 mm.

### Measurement Methods

The following measurement methods were used to characterize the individual components and the obtained products mentioned in this description:
The Melt Flow Index (MFI) is a measure of the ease of flow of the melt of a thermoplastic polymer (or of a mixture containing such a polymer). It is defined as the mass of polymer (of the mixture containing said polymer), in grams, flowing in ten minutes through a capillary of a specific diameter and length by a pressure applied via prescribed alternative gravimetric weights for alternative prescribed temperatures. The Melt Flow Index (MFI) was determined according to ISO standard 1133-1 (DIN EN ISO 1133-1: 2011):
The definitions of said DIN EN ISO 1133-1: 2011 are relevant concerning the present invention. However, only for purposes of additional explanation some details should be mentioned:
The MFI is generally measured at 130 °C at a load of 2,16 kg.

For each measurement, 5 g of material was heated for 5 minutes inside the measurement cylinder prior to the start of a measurement. The MFI is the average value for three portions.

The solid content of the aqueous polyolefin dispersion X was measured. This means that after removal of the water the solid content of the aqueous polyolefin dispersion X was measured. The removal of the water was performed as follows: (Liquid) Samples of the aqueous polyolefin dispersion X were dried in an oven: 15 grams of liquid dispersion is poured into a small aluminum dish and dried at 90°C in an oven for at least 7 hours. The sample must be stirred or agitated at regular intervals to avoid skin formation and to ensure continuous drying. After removing the liquid parts, the solid content should be cut into small pieces (1mm × 1mm). These pieces can be used to measure the MFI.

The *melting temperature* of a component was determined using differential scanning calorimetry according to ISO 11357. For the measurement a Mettler Toledo DSC Star System was used. The measurements were carried out under nitrogen in a temperature range of -60 to 200 °C and a heating rate of 10 K/min.

The *viscosity* of a dispersion was measured using a Thermo Fisher Scientific HAAKE^{™} Rotation Rheometer RV1 at 20 °C using a double-cone DC60/2 Ti L configuration in combination with a MPC/DC60 geometry. The measurements were performed during 120 s at shear rates between 0 and 120 s⁻¹. The viscosity values at shear rate 114 s⁻¹ are evaluated.

The *particle size* was measured using a Microtrac S3500 laser diffraction system, using a wet dispersion module. For each measurement, 1 ml of a dispersion was added to the 1 l dispersing module, where the dispersing module was filled with water with a pH in the range of 7 - 10. The further settings are cell size 2 mm, ultrasound duration 60 s. The specific value is x50-value in µm.

The *solid content* of a dispersion was determined in a Moisture Analyzer HC103 from Mettler-Toledo GmbH. The measurements are done at 130 °C for 30 minutes, then the weight is constant.

The pH value was determined by a pH meter SevenExcellence S975-uMix from Mettler-Toledo GmbH accorded to DIN ISO 8975 of the undiluted dispersion.

The preparation of the samples for the different barrier tests contains several steps: The dispersion is applied to the substrate with a wire bar and then it is dried at 120°C for 120 seconds in an oven.

The coating weight of the of the applied dispersion layer was determined gravimetrically. For this purpose, circles with a defined area are cut out from the uncoated substrate using circular cutter and weighed with an analytical balance. Then circles with the same area are cut out from the coated substrate and weighted, too. The difference is standardized and describes the load quantity in grams per square meter.

The used substrate is a precoated white top kraftliner paper. The main end uses are for example foods, beverages and different consumer goods. The paper structure is made out of three parts: an unbleached chemical pulp at the bottom, a bleached chemical pulp and on top 2 precoating layers. The grammage is 125 g/m² and it has got a thickness of 120 µm. The papers friction angle is 22 ° (TAPPI T 815), the gloss is 60 % (ISO 8254-1), the), the smoothness 1,4 µm (PPS10, ISO 8791-4).

The *water vapour permeability* is measured accorded to ISO 15106-2 and ASTM F1249 with the C390H Water Vapor Transmission Rate Test System from Labthink^{®}. The measurements were done at two different conditions (23 °C and 50 % rh and 38 °C and 90 % rh). The coated side of the substrates was faced to the water vapor side of the measuring device.

The *water absorption*/*resistance* was measured using a COBB Tester accorded to DIN EN ISO 535 ("Paper and board - Determination of water absorptiveness"). For this purpose, the sample is cut out and weighted with an analytical balance. Afterwards, the sample is exposed to water in the COBB tester for a certain time and then couched between two blotting papers to remove the excess water from the sample surface. Then the "wet" sample is weighted, too and the difference is standardized and describes the water absorption in grams per square meter. The time can vary between 60 seconds (COBB 60) and 1800 seconds (COBB 1800).

Typically, the fiber preparation according to the present invention forms a solid article, which is preferably provided by sheet. Normally, at least 80 wt.% of the fibers are provided by cellulose fibers so that the fiber preparation is provided by a paper or a carton article. The relevant fibers might be selected from cellulose and lignocellulose fibers and combinations thereof which are obtainable from annual or perennial plants, in particular from wood. Also, synthetic fibers, especially thermoplastic synthetic fibers might be used - e.g. on the basis of: glycolic acid polymer, polyolefin, polyethylene terephthalate, polyester, polyamide, polylactide, polyvinyl alcohol or polybutylene succinate. Additionally, reinforcement fibers might be used, e.g. selected from polymer fibers, mineral fibers, non-wood natural fibers and glass-fibers and combinations thereof. The fibers might be biodegradable and/or recyclable.

The corresponding fiber made products might be carrier bags and sacks, shopping bags, refuse sacks, wrappings of goods, industrial packages, medical packages, coverts, envelopes and bags for replacing plastic bags.

The treating with the aqueous polyolefin dispersion is performed by applying the aqueous polyolefin dispersion as a binder and/ or as a coating of fibers and thereafter the water of the aqueous polyolefin dispersion is removed. Typically, the water of the aqueous polyolefin dispersion is removed by drying, preferably at temperatures above 75 °C. The relevant (drying) temperature should be generally sufficient hight in order to allow a film-building of the contained polymer. Said film-building might be important regarding barrier properties.

Said product is typically provided by paper or by carton. The treatment of the relevant paper substrate with the aqueous polymer dispersion might be performed by coating with a squeegee/ wire bar, flexoroll or by spraying.

The intention of said application is preferably to improve the barrier properties concerning grease-resistance, water-resistance and/or water-vapor-resistance.

Especially these barrier properties are important for the quality of paper packaging materials.

As a further aspect of the present invention it should be taken into consideration that the applied dispersion should be on the one hand easy to process (means e.g., a limited viscosity) and on the other hand to be manufacturable with a sufficient "volume efficiency" (sufficient solid content). The dispersion according to the present invention combines these quality requirements with said barrier improving properties.

### EXAMPLES:

Various aqueous dispersions were prepared using the following procedure:
- In a first step a compound was prepared by mixing and kneading the individual ingredients in a Leistritz ZSE 18 Maxx twin screw extruder at a temperature in the range of 80 - 150 °C (temperature was selected based on the ingredients), where different temperature zones were created inside the extruder. The pressure inside the extruder was 35 bar maximum.
- In a next step the extruded compound was fed into a Büchi 2 l Pressure reactor, equipped with a dissolver mixer operating at speeds between 100
   - 1000 rpm. The dispersion was prepared at elevated temperature in the range of 90 - 150 °C at sometimes elevated pressure (additional pressure in the range of 0 - 100 bar). After the formation of a homogeneous dispersion the cooling of the mixture is essential. The cooling has to be performed as quickly as possible at crystallization temperature of the polymers until maximum temperature of 40 °C.

The ingredients (in parts by weight, based on solid content) and conditions for each example are given in Table 1 below.

**Table 1**

| **Example** | **0*** | **1**** | **2** | **3** | **4**** | **5** | **6** | **7** | **8** |
|---|---|---|---|---|---|---|---|---|---|
| EAA - type A1-1 | | 60 | 45 | 30 | 90 | 75 | 60 | 45 | 30 |
| EAA - type A1-2 | | | 15 | 30 | | 15 | 30 | 15 | 30 |
| POP | | 40 | 40 | 40 | | | | | |
| EVA | | | | | 10 | 10 | 10 | 40 | 40 |
| "Laponite" | | 3.3 | 3.3 | 3.3 | | | | | |
| silica | | | | | 3.3 | 3.3 | 3.3 | 3.3 | 3.3 |
| Solid content (%) | | 31 | 31 | 31 | 31 | 31 | 31 | 31 | 31 |
| Base | | NH₃ | NH₃ | NH₃ | NH₃ | NH₃ | NH₃ | NH₃ | NH₃ |
| pH value | | 8.9 | 9.1 | 9.3 | 8.3 | 8.5 | 8.6 | 9.4 | 9.3 |
| Viscosity [mPa·s] | | 512 | 363 | 226 | 296 | 327 | 597 | 99 | 22 |
| MFI Solids (dried dispersion X) g/10 min; (DIN EN ISO 1133-1:2011) | | 4,93 | 2,92 | 6,34 | 5,58 | 8,02 | 9,28 | 2,63 | 4,52 |
| Water resistance Cobb-water 1800 [g/m²] | 80 | 52.8 | 42 | 9.5 | 63 | 22 | 9.8 | 11.7 | 6 |
| WVTR 23°C, 50% rh [g/m2*d] | 567 | 32 | 24 | 12.4 | 48 | 13.5 | 12.7 | 27.3 | 32.2 |

| | | | | | | | | | |
|---|---|---|---|---|---|---|---|---|---|
| * paper substrate without coating ** reference examples | | | | | | | | | |

**EAA** - **type A1-1:** dispersible polymer (polymerization mixture) which is an ethylene acrylic acid copolymer, MFI 300 g/10 min; 190°C/2.16kg, acrylic acid content: 20.5 wt.%
**EAA** - **type A1-2**: dispersible polymer (polymerization mixture) which is an ethylene acrylic acid
   copolymer, MFI 1430 g/10 min; 190°C/2.16kg, acrylic acid content: 20.7 wt.%
**POP**: propylene-based elastomer with an ethylene content of 15 wt. %, MFI 9.1 g/10min;190°C/2,16 kg
**EVA**: ethylene vinyl acetate, vinyl acetate content 27.0 wt.%, MFI 3.0 g/10min; 190°C/2,16 kg
**Silica**: hydrophilic pyrogenic silica with a specific surface area of 200 m²/g
**Laponite**: synthetic layered phosphate modified silicate with a specific surface area of 330 m²/g

## Claims

1. Aqueous polyolefin dispersion X comprising
a. from 50 to 100 wt.% of an aqueous dispersion A comprising the following ingredients:
i. from 41 to 99 wt.% of A1, a mixture of different types of copolymers of ethylene and (meth)acrylic acid,
ii. from 1 to 59 wt.% of A2, another polymer or a mixture of other polymers, each not being a copolymer of ethylene and (meth)acrylic acid and each containing structure units of ethylene,
iii. from 0 - 35 wt.% of additive not being A1 or A2,
b. from 0 to 50 wt.% of a compound B, where compound B is a material dispersible or soluble in water and different from any of the ingredients of dispersion A,
wherein
- the wt.% of A and B is based on the solid content of the whole aqueous polyolefin dispersion X,
- the wt.% of the ingredients of dispersion A is based on the solid content of dispersion A,
- the sum of the wt.% of ingredients i) to iii) of dispersion A is 100%
and wherein after removal of the water the solid content of the aqueous polyolefin dispersion X has a Melt Flow Index (MFI) lower than 10 g/10min (DIN EN ISO 1133-1: 2011; measured at 130 °C at a load of 2,16 kg).

2. Aqueous polyolefin dispersion according to claim 1, wherein the at least two different types of copolymers have a different MFI.

3. Aqueous polyolefin dispersion according to claim 1, wherein each of the at least two different types of copolymers were produced by free radical copolymerization of ethylene with corresponding acid monomer, wherein the relevant copolymerization reaction conditions are selected differently in each case so that the at least two different types of copolymers differ in terms of their MFI.

4. Aqueous polyolefin dispersion according to one of the claims 1 - 3, wherein the dispersion A comprises the following ingredients:
i) from 51 to 99 wt.% of A1,
ii) from 1 to 49 wt.% of A2,
and
iii) from 0 - 35 wt.% of additive not being A1 or A2.

5. Aqueous polyolefin dispersion according to one of the claims 1 - 4, wherein after the removal of the water the solid content of the dispersion X has a Melt Flow Index (MFI) of 2.5 to 9.5 g/10min.

6. Aqueous polyolefin dispersion according to one of the claims 1 - 5, wherein at least 60 wt.% of A1 has a content of (meth)acrylic acid based groups in the copolymer of 5-30 wt.%, wherein the wt.% is based on the total weight of the copolymer.

7. Aqueous polyolefin dispersion according to one of the claims 1 - 6, wherein at least 60 wt.% of A2 has an acid value of < 2 mg KOH/ g.

8. Aqueous polyolefin dispersion according to one of the claims 1 - 7, wherein at least 60 wt.% of A2 are selected from the group consisting of copolymers containing vinyl acetate structural units and/or olefinic structural units with at least 3 carbon atoms.

9. Aqueous polyolefin dispersion according to one of the claims 1 - 8 comprising dispersed hybrid particles containing A1 and A2.

10. Aqueous polyolefin dispersion according to one of the claims 1 - 9 having a pH-value of 8.0 - 10.0.

11. Process for the preparation of the aqueous polyolefin dispersion of any of claims 1 to 10 wherein
a. in a first step all polymer components of dispersion A are intimately mixed at a temperature in the range of 50°C to 200 °C after which a homogenous compound of all components is obtained and
b. in a next step the homogeneous compound is mixed with water, with compound B if contained, and a neutralizing agent at a temperature which is 2 to 20°C above the highest melting temperature of the organic polymer components mixed in the first step until an aqueous dispersion is obtained wherein all dispersed particles have a particle size below 150 µm.

12. Use of an aqueous polyolefin dispersion according to one of the claims 1 - 10 or an aqueous polyolefin dispersion producible by a process according to claim 11 as a binder and/or as a coating composition for a fiber-based substrate, preferably for paper or carton.

13. Fiber preparation which has been treated with an aqueous polyolefin dispersion according to one of the claims 1 - 10 or an aqueous polyolefin dispersion producible by a process according to claim 11.
